# FASCICULE DE BREVET EUROPEEN

(11) **EP 1 356 674 B1**
(45) Date de publication et mention de la délivrance du brevet: **29.09.2004**
(21) Numéro de dépôt: 01994908.0
(22) Date de dépôt: 19.12.2001
(51) Int. Cl.: H04N 5/782

(54) **PROCEDE DE GESTION D'ENREGISTREMENTS D'EMISSIONS AUDIOVISUELLES ET DISPOSITIFS ASSOCIES**
VERFAHREN ZUM VERWALTEN AUDIOVISUELLER RUNDSENDUNGSAUFZEICHNUNGEN UND ZUGEORDNETE EINRICHTUNGEN
METHOD FOR MANAGING AUDIOVISUAL BROADCAST RECORDINGS AND ASSOCIATED DEVICES

(30) Priorité: 28.12.2000 FR 0017182
(43) Date de publication de la demande: 29.10.2003
(73) Titulaire: Thomson Licensing S.A., 92100 Boulogne-Billancourt (FR)
(72) Inventeur: SHAO, Jiang, F-35000 Rennes (FR); MAETZ, Yves, F-35520 Melesse (FR)
(74) Mandataire: Kohrs, Martin
(86) Numéro de dépôt international: PCT/FR2001/004071
(87) Numéro de publication internationale: WO 2002/054761

(56) Documents cités:
- WO-A-97/28630
- WO-A-98/17033
- DE-A- 19 909 522

## Description

L'invention concerne un procédé de gestion d'enregistrements d'émissions audiovisuelles au sein d'un réseau de communication numérique.

WO 97 28630 décrit un procédé de gestion des enregistrements et des résolutions des conflits entre un décodeur et un magnétoscope.

DE 199 09 522 décrit un procédé de gestion d'enregistrement de programmes TV qui comporte un test pour savoir si l'enregistrement de l'émission au moment déterminé n'entre pas en conflit avec un autre enregistrement et si c'est le cas, une recherche d'un autre moment de diffusion de l'émission est effectuée et l'enregistrement est programmé pour cet autre moment.

L'utilisation d'un réseau de communication pouvant contenir plusieurs dispositifs d'enregistrement est décrite dans WO 98 17033 qui enseigne que les appareils peuvent être programmés pour fonctionner selon certaines associations et que dans certains cas ces associations peuvent être détruites.

Un réseau de communication numérique comprend des appareils reliés entre eux par un bus de communication, par exemple le bus IEEE 1394, utilisant des fils ou des ondes. Le réseau de communication comporte, par exemple, les appareils suivants : un terminal permettant à des utilisateurs de visualiser des émissions audiovisuelles, d'introduire des paramètres de contrôle du réseau et de connaître l'état du réseau, un récepteur de télévision numérique (un décodeur par exemple) capable de recevoir des émissions audiovisuelles et des informations de service provenant d'un réseau de diffusion, un dispositif de mémorisation des émissions audiovisuelles, un modem, etc. Les informations de service contiennent des indications sur la diffusion des émissions, ces informations sont consultables sur le terminal, par exemple, sous la forme d'un Guide Electronique de Programmes (EPG en abrégé). La liste des appareils n'est pas exhaustive. Les appareils peuvent être en plusieurs exemplaires au sein du réseau de communication, par exemple on peut imaginer que, pour un réseau de communication domestique, chaque pièce de l'habitation dispose d'un terminal, que plusieurs récepteurs permettent de recevoir des émissions provenant de plusieurs réseaux de diffusion, et que le réseau de communication dispose de plusieurs dispositifs de mémorisation de type différent, par exemple un magnétoscope numérique et un disque dur.

Dans un tel réseau de communication, on trouve des premiers appareils qui fournissent à l'utilisateur un service via le réseau de communication et des seconds appareils qui reçoivent et fournissent ensuite ce service au réseau. Par exemple, l'écran de visualisation d'un terminal permet aux utilisateurs de regarder une émission provenant soit d'un récepteur, soit d'un dispositif de mémorisation.

Le réseau de communication numérique permet aux utilisateurs et aux applications de partager des ressources au sein d'une habitation. Mais, il peut arriver que, au même moment, des utilisateurs disposant de terminaux différents, veuillent regarder des émissions audiovisuelles différentes provenant d'un même récepteur numérique ou d'un même dispositif de mémorisation. Le partage des ressources entraîne des conflits d'utilisation. Un problème typique consiste en ce qu'un utilisateur ou une application a besoin de faire un enregistrement alors que une ou plusieurs des ressources nécessaires sont déjà occupées par une autre tâche. L'impossibilité de mener à bien une tâche d'enregistrement d'une émission peut être due à l'indisponibilité d'un récepteur, l'indisponibilité du dispositif de mémorisation et/ou l'insuffisance de bande passante nécessaire à la transmission de l'émission sur le réseau de communication. Il peut se poser le problème de résoudre des conflits liés à la programmation ou à l'indisponibilité des ressources. Par exemple, lorsqu'il est prévu d'enregistrer une émission et qu'au moment de sa diffusion, la ressource prévue n'est pas disponible, l'enregistrement est abandonné. L'utilisateur s'aperçoit trop tard que l'enregistrement ne s'est pas effectué, ce qui n'est pas satisfaisant pour lui.

La présente invention permet de mieux utiliser les indications de service émis par le réseau de diffusion afin d'optimiser l'utilisation des ressources du réseau de communication. La présente invention permet ainsi d'optimiser l'utilisation des dispositifs d'enregistrement connectés en réseau.

La présente invention consiste en un procédé de gestion d'enregistrements au sein d'un réseau de communication, comme défini dans la revendication 1.

De cette façon le réseau recherche une diffusion ultérieure de l'émission et modifie les paramètres initiaux afin que la tâche s'exécute lors d'une diffusion ultérieure. L'utilisateur n'ayant pas besoin d'intervenir, le réseau se charge de gérer les conflits.

Selon un autre perfectionnement, si les deux tentatives de substitution de l'heure et du dispositif s'avèrent infructueuses, le réseau lance une étape de négociation afin de déterminer si des tâches en cours peuvent céder les ressources requises à la tâche à exécuter. Dans l'affirmative, la tâche en cours est interrompue et la ressource ainsi libérée est attribuée à la tâche d'enregistrement qui doit être lancée.

Selon un autre perfectionnement, au moment d'une rediffusion de l'émission, si l'équipement initialement prévu n'est pas disponible, le procédé comporte une étape de recherche d'un équipement équivalent pour effectuer l'enregistrement.

L'invention a aussi pour objet un dispositif d'enregistrement d'émissions audiovisuelles reçues à travers un réseau de diffusion comme défini par la revendication 6. Selon un autre perfectionnement, si l'émission n'est pas diffusée ultérieurement et si aucun autre dispositif de mémorisation n'est disponible, un moyen de négociation est activé afin de déterminer si des taches en cours peuvent céder les ressources requises à la tâche à exécuter. Si le moyen de négociation a permis d'interrompre une tâche en cours, la ressource ainsi libérée est activée pour effectuer la tâche à exécuter.

D'autres caractéristiques et avantages de la présente invention ressortiront de la description des exemples de réalisation qui vont suivre, pris à titre d'exemples non limitatifs, en référence aux figures annexées dans lesquelles :
La figure 1 représente un schéma d'un réseau domotique dans lequel l'invention est mise en oeuvre;
La figure 2 représente une première partie de l'organigramme d'exécution des différentes étapes du procédé.
La figure 3 représente une seconde partie de l'organigramme d'exécution des différentes étapes du procédé.

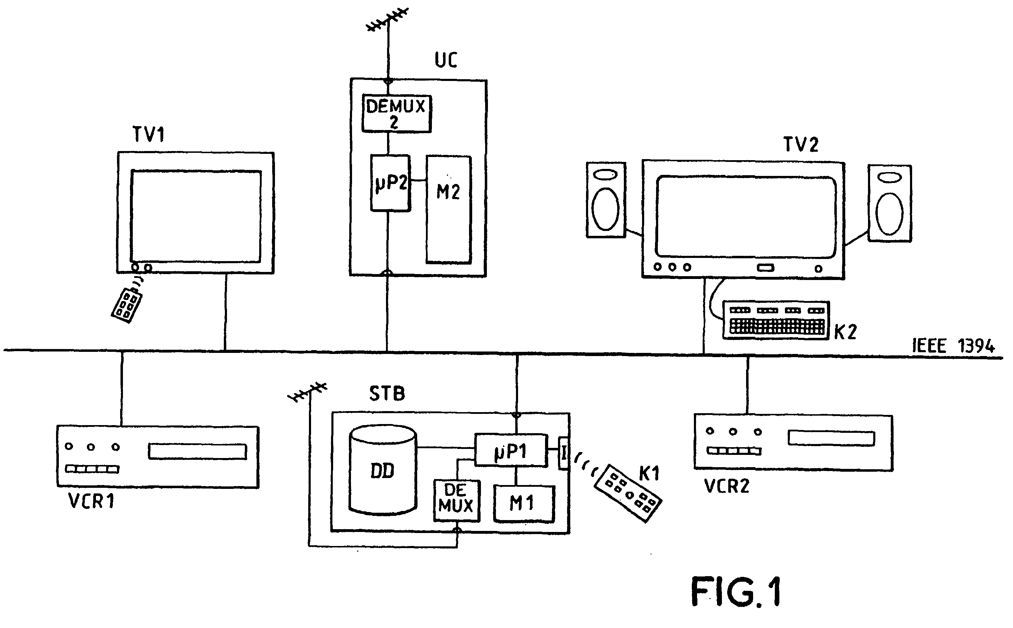

Un réseau de communication numérique selon un présent exemple de réalisation est décrit à la figure 1. Ce réseau comprend par exemple les appareils suivants : un décodeur STB doté d'une unité ce traitement µP1, d'une mémoire M1 permettant de stocker des programmes et des données, d'un syntoniseur et d'un démultiplexeur DEMUX permettant de recevoir des émissions d'un réseau de diffusion, d'une interface I permettant de recevoir des signaux d'une télécommande K1, et d'un disque dur DD de grande capacité, trois moyens de mémorisation d'émissions audiovisuelles : deux magnétoscopes numériques VCR1 et VCR2 et le disque dur DD, deux écrans de télévision TV1 et TV2, dont le second est doté d'un clavier K2 et peut servir de terminal pour introduire des ordres dans le réseau. Le réseau dispose également d'une liaison téléphonique à l'aide d'un modem (MODEM) intégré dans le décodeur, ou constituant un élément indépendant connecté au réseau. Tous ces appareils sont reliés entre eux par un bus numérique utilisant par exemple le standard IEEE 1394.

Le réseau comprend également un gestionnaire de réseau permettant de connaître l'état de disponibilité des appareils connectés au bus. Le gestionnaire reçoit des requêtes pour exécuter des tâches et les alloue à un ou plusieurs appareils susceptibles de les mener à bien. Selon le mode de gestion du réseau, le gestionnaire ne se trouve pas au même endroit. Si la gestion est répartie, il se trouve sous la forme d'un programme dupliqué dans chaque appareil. Chaque appareil est doté d'un identificateur ID (par exemple, le « node ID » attribué par le gestionnaire du bus IEEE 1394). Lorsqu'une requête est lancée, l'allocation s'effectue selon un protocole très simple : le premier appareil interrogé est celui qui a la plus petite valeur d'identificateur. Il vérifie s'il est capable d'effectuer tout ou partie de la requête et en informe les autres appareils. Le dialogue continue avec les autres appareils en augmentant la valeur d'identificateur. Chaque appareil mémorise les paramètres de toutes les taches d'enregistrement qu'il doit exécuter. Si la gestion du réseau est de type centralisé, le gestionnaire de réseau est réalisé par une unité centrale (UC) contrôlant les différents appareils et leur envoyant individuellement les commandes à exécuter. L'unité centrale comporte une unité de traitement (µP2), une mémoire (M2) pour le stockage d'un programme et des paramètres de programmation d'un enregistrement, et d'un syntoniseur et d'un démultiplexeur DEMUX2 permettant de recevoir au moins les informations de service concernant la diffusion des émissions. En variante, l'unité centrale UC peut recevoir les informations de service du décodeur STB via le bus IEEE1394.

Le décodeur reçoit des données numériques émises par un satellite. Le contenu numérique de ces données sont, par exemple, des images au format MPEG, constituant des émissions audiovisuelles. Par exemple, les données reçues sont formatées selon la norme DVB établie par l'ETSI (« European Telecommunications Standards Institute ») publiée en septembre 1997 sous la référence EN300 468 - V1.3.1 ou sous la référence REN/JTC-00DVB-43. Les données diffusées comprennent également des informations de service qui spécifient les moments de diffusion des différentes émissions audiovisuelles. Ces informations de service sont définies par les spécifications DVB-SI (« Digital Video Broadcast - specification for Service Information » ou encore « diffusion de vidéo numérique - spécification des informations de service).

Selon le présent exemple de réalisation, les informations de service peuvent également provenir d'autres sources, par exemple d'un serveur accessible par l'Internet. Le moyen de réception des émissions audiovisuelles est un syntoniseur ou tuner selon la terminologie anglo-saxonne. Elles sont ensuite mémorisées soit dans le disque dur du décodeur, soit à l'aide d'un magnétoscope numérique dans des cassettes à bande magnétique. Les données sont ensuite lues à partir du dispositif d'enregistrement, transmises via le réseau numérique et visualisées sur un des deux écrans de télévision TV1 ou TV2.

A l'aide des informations s'affichant sur l'écran du terminal, l'utilisateur peut connaître les émissions diffusées prochainement. Il parcourt les informations à l'aide d'une interface utilisateur, qui exploite les informations de service diffusées dans les flux ou obtenues à travers un service, par exemple Internet. L'utilisateur introduit ses ordres à l'aide de la télécommande ou du clavier, et des indications affichées à l'écran. Il peut ainsi programmer l'enregistrement d'une émission qui est diffusée à certain(s) moments(s). Dans le domaine de la télévision numérique, les émissions sont diffusées plusieurs fois selon la technique du carrousel. Ainsi l'utilisateur peut choisir le moment où il veut les voir et aussi revoir plusieurs fois une émission qu'il a particulièrement appréciée. Notre invention utilise cette caractéristique pour optimiser la gestion des enregistrements.

Les paramètres introduits par l'utilisateur sont enregistrés dans la mémoire d'un des appareils du réseau. Le réseau de communication peut disposer d'une unité centrale de gestion (UC). Cette unité centrale reçoit les ordres donnés par l'utilisateur sur le clavier K2 et contrôle de manière centralisé tous les appareils connectés au réseau. Dans d'autres cas, comme par exemple le réseau HAVI, la gestion du réseau est déporté dans chaque appareil. Les paramètres d'enregistrement sont envoyés sur le réseau, l'appareil susceptible d'effectuer la tâche les récupère et les mémorise dans sa mémoire. Le moment venu, le réseau lui envoie les données de l'émission sous forme numérique et il les enregistre.

Par exemple, un utilisateur est intéressé par une émission mais celle-ci n'est pas diffusée à des moments où il est présent. Il décide alors de programmer l'enregistrement de l'émission.

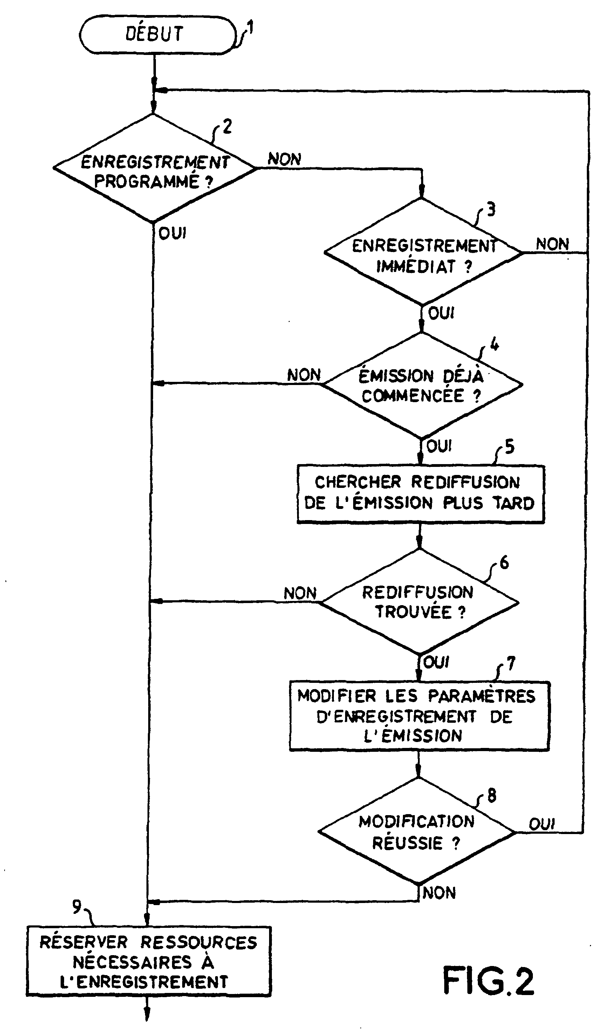

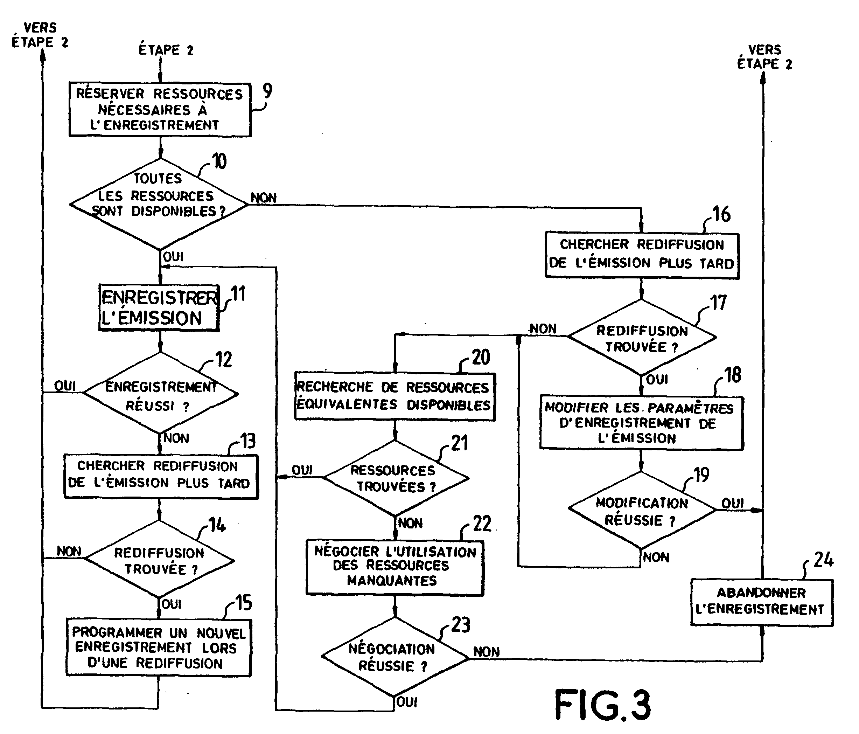

Les figures 2 et 3 montrent un organigramme du déroulement du procédé selon un exemple de réalisation. L'exemple décrit une réalisation à l'aide d'un réseau HAVI, le module de gestion des enregistrements se trouvant sous la forme d'un programme dupliqué dans au moins certains appareils du réseau (VCR1, VCR2, STB). Il se trouve notamment dans la mémoire M1 du décodeur STB, ce module permettant d'enregistrer les émissions dans le disque dur DD. Le programme se compose d'un certain nombre de blocs fonctionnels. Un premier bloc comprenant les étapes 1 à 8 exécute la gestion d'un enregistrement immédiat. Un second bloc comprenant les étapes 9 à 10 permet de déterminer la disponibilité des ressources nécessaires pour l'exécution de la tâche prévue. Untroisième bloc contient les étapes 11 à 15 d'exécution de la tâche prévue. Un quatrième bloc comprenant les étapes 16 à 24 consiste à rechercher une solution alternative pour exécuter la tâche prévue. Ce quatrième bloc comprend notamment un ensemble d'étapes de négociation.

Le programme de gestion du réseau est mis en route à l'étape 1. A l'étape 2, le programme teste si une tâche est programmée, c'est à dire si un enregistrement doit être exécuté à ce moment. Pour réaliser cela, il peut par exemple lire l'horloge interne du dispositif d'enregistrement, et comparer la valeur courante de temps avec les heures de début des enregistrements programmés. Si l'heure de déclenchement d'une tâche d'enregistrement est atteinte, le programme saute à l'étape 9, qui consiste à réserver les ressources pour mener à bien la tâche d'enregistrement programmée.

Si aucun enregistrement n'est programmé à l'heure courante, le programme teste (étape 3) si un enregistrement immédiat est provoqué par un utilisateur. Un enregistrement immédiat est déclenché quand, par exemple, un utilisateur appuie sur la touche enregistrement du magnétoscope. Si la réponse est négative, le programme retourne à l'étape 2. Si la réponse est positive, le programme teste alors si l'émission est déjà commencée. Si ce n'est pas le cas, le programme saute à l'étape 9 pour réserver les ressources et être prêt pour lancer cet enregistrement immédiat. Si l'émission est déjà commencée, il est préférable d'attendre une nouvelle rediffusion afin d'enregistrer une émission complète. C'est pour cela qu'à l'étape 5, le programme recherche les diffusions ultérieures de cette émission et teste s'il est possible d'enregistrer plus tard l'émission (étape 6). La recherche s'effectue en analysant les informations de service, diffusées dans les tables DVB-SI par le réseau de diffusion, ou obtenues sur un serveur via par exemple, le réseau téléphonique. S'il n'y a pas de rediffusion, le programme saute à l'étape 9 pour enregistrer au moins une partie de l'émission. Dans le cas contraire, à l'étape 7, les paramètres d'enregistrement sont modifiés afin de prendre en compte les diffusions ultérieures. Puis (étape 8), le programme teste si la modification est possible. Dans l'affirmative, le programme retourne à l'étape 2. Dans lecas contraire, le programme continue à l'étape 9.

A l'étape 9, le programme lance une requête d'allocation et réserve les ressources pour mener à bien la tâche d'enregistrement. Si l'utilisateur veut enregistrer une émission diffusée, il lui faut au moins un dispositif d'enregistrement (disque dur ou magnétoscope), un moyen de réception (tuner), et une certaine quantité de bande passante disponible sur le réseau. A l'étape 10, le programme teste si ces ressources nécessaires sont disponibles actuellement. Dans l'affirmative, le programme lance l'enregistrement prévu (étape 11) en utilisant les ressources réservées à l'étape 9. A la fin de l'enregistrement, le programme vérifie son bon déroulement (étape 12). Si l'enregistrement s'est bien déroulé, le programme retourne au début, à l'étape 2. Dans le cas contraire, par exemple lorsqu'un utilisateur a récupéré manuellement le dispositif d'enregistrement pour son propre usage, le programme recherche des diffusions ultérieures de l'émission à enregistrer (étape 13). Si la recherche est infructueuse, l'émission n'étant plus diffusée (étape 14), alors il n'est plus possible de l'enregistrer de nouveau. Le programme revient à l'étape 2. Si par contre, d'autres diffusions sont prévues, le programme saute à l'étape 15 d'introduction de nouveaux paramètres d'enregistrement dans le mémoire du dispositif, puis le programme revient au début, et attend le moment spécifié dans les paramètres pour lancer cet enregistrement.

A la suite de l'étape 10, si toutes les ressources ne sont pas disponibles actuellement, le programme saute à l'étape 16 de recherche des diffusions ultérieures de cette émission. Si le programme découvre à l'étape 17 que l'émission est diffusée ultérieurement, alors à l'étape 18 une nouvelle requête de programmation est mémorisée avec les paramètres de la prochaine diffusion. Puis (étape 19), le programme teste si la modification est réussie. Si la modification est réussie, le programme saute à l'étape 2, sinon le programme continue en séquence à l'étape 20.

S'il n'est pas possible de différer l'enregistrement, le programme lance une phase de recherche des ressources équivalentes (les étapes 20 et 21), puis de négociation de l'allocation des ressources comprenant les étapes 22 à 23. A l'étape 20, le programme recherche si une ressource équivalente (pour chaque ressource nécessaire manquante) est disponible. Par exemple, l'enregistrement d'une émission audiovisuelle peut être fait sur un magnétoscope, mais aussi sur un disque dur. Le test à l'étape 21 permet de passer à l'étape 11 d'enregistrement lorsque toutes les ressources manquantes sont trouvées. Sinon, le programme passe à l'étape 22 de négociation pour les ressources manquantes. Cette étape consiste à demander aux utilisateurs (ou applications) qui utilisent actuellement les ressources manquantes de les lui céder. Le programme envoie une requête d'abandon aux différents processus qui utilisent une ressource manquante, et reçoit en retour une information indiquant si la ressource a été libérée ou non. Par exemple, si une ressource est occupée à recopier un contenu d'un support vers un autre, cette tâche pouvant être décalée dans le temps, l'application de transfert décide de libérer la ressource. Si la ressource est un récepteur recevant une émission qu'un utilisateur regarde, un message pour l'inviter à abandonner la visualisation est proposé à cet utilisateur. S'il refuse, la ressource n'est pas libérée.

Si le résultat de la négociation est positif en faveur de la tâche prévue, c'est à dire que le programme obtient les ressources qui lui manquaient pour exécuter la tâche prévue, le programme saute à l'étape 11 en lançant l'enregistrement sur les ressources libérées. Si le résultat est négatif, il n'est vraiment pas possible d'effectuer la tâche prévue, le programme l'efface donc (étape 24) et retourne à l'étape 2. Avantageusement, le programme avertit par un message à l'utilisateur de l'abandon de l'enregistrement.

Lorsque le programme trouve à l'étape 17 une rediffusion de l'émission, les paramètres de la prochaine diffusion sont enregistrés puis le programme reboucle à l'étape 2 d'attente de la prochaine rediffusion. Lorsque survient ce moment, le programme détermine si le dispositif d'enregistrement prévu est disponible et dans la négative, recherche d'autres dispositifs d'enregistrement. De cette façon, le programme prend en compte les diffusions ultérieures de l'émission et la disponibilité des dispositifs de mémorisation au cours de ces diffusions. Il recherche une solution consistant à utiliser un autre dispositif de mémorisation que celui initialement prévu et en programmant l'enregistrement lors d'une diffusion ultérieure.

Les exemples de réalisation de l'invention présentés ci-dessus ont été choisis pour leur caractère concret. Il ne serait cependant pas possible de répertorier de manière exhaustive tous les modes de réalisation que recouvre cette invention. En particulier, toute étape ou tout moyen décrit peut-être remplacé par une étape ou un moyen équivalent sans sortir du cadre de la présente invention.

## Revendications

1. Procédé de gestion d'enregistrements au sein d'un réseau de communication comportant au moins un moyen de réception d'émissions audiovisuelles (STB) et d'informations de service diffusées par un réseau de diffusion ; le procédé comportant
- a) une étape préliminaire d'introduction de paramètres de programmation d'un enregistrement d'une émission audiovisuelle à un moment déterminé et dans un dispositif d'enregistrement déterminé,
- b) au moment déterminé, test si le dispositif de mémorisation déterminé est disponible (10) ;
- c) en cas de réponse négative à l'étape a), recherche d'au moins un autre moment de diffusion de l'émission (16,17) dans les informations de services diffusées ;
- d) si l'émission est diffusée ultérieurement, modification du moment déterminé en vue d'enregistrer lors d'une diffusion ultérieure (18). **caractérisé en ce que** le réseau comprend une pluralité de dispositifs d'enregistrement (VCR1, VCR2, DD) desdites émissions audiovisuelles et **en ce que** le procédé comporte en outre l'étape :
- e) si l'émission n'est pas diffusée ultérieurement, recherche d'un autre dispositif d'enregistrement disponible connecté au réseau, et exécution de l'enregistrement au moment déterminé (21,21) dans un dispositif disponible.

2. Procédé de gestion d'enregistrement selon la revendication 1; **caractérisé en ce qu'**il comporte en outre les étapes de :
- f) si aucun dispositif d'enregistrement n'est disponible, négociation avec les utilisateurs ou les applications utilisant les dispositifs manquants afin de déterminer si ceux-ci peuvent libérer lesdits dispositifs manquants (22,23) ;
- g) si les dispositifs manquants sont obtenus, lancement de l'enregistrement sur le dispositif ainsi libéré (11).

3. Procédé de gestion d'enregistrement selon la revendication 1 ou 2, **caractérisé en ce que**, si au moment d'une rediffusion de l'émission, le dispositif déterminé n'est pas disponible, le procédé recherche un autre dispositif d'enregistrement équivalent (VCR1, VCR2, DD) pour effectuer l'enregistrement.

4. Procédé de gestion d'enregistrement selon l'une quelconque des revendications précédentes; **caractérisé en ce que** consécutivement à l'enregistrement de l'émission (11), il comporte en outre les étapes :
- h) de vérification de l'enregistrement (12) ;
- i) si l'enregistrement s'est mal déroulé, d'une étape de recherche d'au moins un autre moment de diffusion de ladite émission et d'une étape de programmation d'un nouvel enregistrement (13, 14, 15).

5. Procédé de gestion d'enregistrement selon l'une quelconque des revendications précédentes; **caractérisé en ce que** les émissions audiovisuelles sont de nature numérique.

6. Dispositif d'enregistrement (VCR1, VCR2, DD) d'émissions audiovisuelles reçues à travers un réseau de diffusion comportant un moyen d'introduction (K1) de paramètres de programmation d'un enregistrement, lesdits paramètres comprenant au moins un moment d'enregistrement déterminé correspondant à une diffusion, une mémoire (M1) pour la mémorisation desdits paramètres, et un moyen de réception (DEMUX) d'informations de service spécifiant les diffusions sur le réseau de diffusion des dites émissions audiovisuelles, **caractérisé en ce qu'**il comporte en outre un moyen de sélection (µP1, M1) d'une autre diffusion lorsque le dispositif d'enregistrement n'est pas disponible au moment déterminé, un moyen de modification dans la mémoire (M1) du moment d'enregistrement afin d'écrire le moment de diffusion sélectionné, d'un moyen de recherche d'un autre dispositif d'enregistrement lorsque le dispositif n'est pas disponible lors de la diffusion de l'émission et si aucune autre diffusion n'est trouvée, et un moyen de transmission des paramètres de programmation pour activer l'enregistrement sur cet autre dispositif si celui-ci est disponible.

7. Dispositif d'enregistrement selon la revendication 6 **caractérisé en ce qu'**il comporte en outre un moyen de négociation (22) activé lorsque aucun dispositif d'enregistrement n'est disponible pour enregistrer l'émission, ledit moyen de négociation recevant une information de libération d'un dispositif d'enregistrement et lançant l'exécution de l'enregistrement de l'émission sur le dispositif ainsi libéré.

8. Dispositif d'enregistrement selon l'une quelconque des revendications 6 ou 7 **caractérisé en ce qu'**il comporte un moyen de vérification (12) de l'enregistrement effectué et un moyen de recherche (13, 14, 15) d'un autre moment de diffusion de ladite émission pour enregistrer une nouvelle fois l'émission, si le premier enregistrement s'est mal déroulé.

9. Dispositif d'enregistrement selon l'une quelconque des revendications 6 à 8 **caractérisé en ce que** le dispositif d'enregistrement est un magnétoscope numérique.

## Patentansprüche

1. Verfahren zur Verwaltung von Aufzeichnungen in einem Kommunikationsnetz mit wenigstens einem Mittel zum Empfang audiovisueller Programme und Serviceinformationen, die durch ein Sendenetz übertragen werden, mit:
- a) einem Schritt zur vorläufigen Einführung von Programmierparametern einer Aufzeichnung eines audiovisuellen Programms zu einer bestimmten Zeit und in einem bestimmten Aufzeichnungsgerät,
- b) eine Prüfung bei der vorbestimmten Zeit, ob das bestimmte Aufzeichnungsgerät (10) verfügbar ist,
- c) im Falle einer negativen Antwort auf den Schritt a) Suche nach wenigstens einer anderen Zeit zur Sendung des Programms (16, 17) in den gesendeten Serviceinformationen,
- d) wenn das Programm später gesendet wird, Änderung der bestimmten Zeit zur Aufzeichnung während einer späteren Sendung (18),
**dadurch gekennzeichnet, dass**
das Netz mehrere Aufzeichnungsgeräte (VCR1, VCR2, DD) für die audiovisuellen Programme enthält und das Verfahren außerdem folgenden Schritt enthält:
- e) wenn das Programm nicht später gesendet wird, suche nach einem anderen, verfügbaren und an das Netz angeschlossenen Gerät und Durchführung der Aufzeichnung zu der vorbestimmten Zeit (21, 21) in einem verfügbaren Gerät.

2. Verfahren zur Verwaltung einer Aufzeichnung nach Anspruch 1, **gekennzeichnet durch** folgende Schritte:
- f) wenn kein Aufzeichnungsgerät verfügbar ist, Verhandlung mit den Anwendern oder Anwendungen unter Anwendung der fehlenden Geräte, um zu ermitteln, ob der letztere die fehlenden Geräte (22, 23) freigeben kann,
- g) wenn die fehlenden Geräte vorhanden sind, Auslösung der Aufzeichnung in dem derart freigegebenen Gerät (11).

3. Verfahren zur Verwaltung einer Aufzeichnung gemäß Anspruch 1 oder 2, **dadurch gekennzeichnet, dass**, wenn zur Zeit einer erneuten Sendung des Programms das bestimmte Gerät nicht verfügbar ist, das Verfahren ein anderes äquivalentes Aufzeichnungsgerät (VCR1, VCR2, DD) zur Durchführung der Aufzeichnung sucht.

4. Verfahren zur Verwaltung einer Aufzeichnung nach einem der vorangehenden Ansprüche, **dadurch gekennzeichnet, dass** es nach einer Aufzeichnung des Programms (11) außerdem folgende Schritte enthält:
- h) Prüfung der Aufzeichnung (12);
- i) wenn die Aufzeichnung schlecht, erfolgt, ein Schritt zur Suche nach wenigstens der Sendung des Programms und ein Schritt zur Programmierung einer neuen Aufzeichnung.

5. Verfahren zur Verwaltung einer Aufzeichnung nach einem der vorangehenden Ansprüche, **dadurch gekennzeichnet, dass** die audiovisuellen Programme von digitaler Art sind.

6. Gerät zur Aufzeichnung (VCR1, VCR2, DD) von audiovisuellen Programmen, die über ein Sendenetz empfangen werden, das Mittel (K1) zur Eingabe von Parametern für die Programmierung einer Aufzeichnung enthält, dass die Parameter wenigstens eine bestimmte Zeit für die Aufzeichnung entsprechend einer Sendung enthalten, einen Speicher (M1) zur Speicherung der Parameter und Mittel zum Empfang (DEMUX) von Informationen des Service für die bestimmten Sendungen auf dem Netz der Sendung der audiovisuellen Programme enthält, **gekennzeichnet durch** zusätzliche Mittel zur Wahl (µP1, M1) einer anderen Sendung, wenn das Aufzeichnungsgerät in der bestimmten Zeit nicht verfügbar ist, ein Mittel zur Aufzeichnung zur Beschreibung der Zeit der gewünschten Sendung, ein Mittel zur Suche nach einem anderen Aufzeichnungsgerät, wenn das Gerät bei der Sendung des Programms nicht verfügbar ist und wenn kein anderes Programm gefunden wird, und ein Mittel zur Umsetzung der Programmierparameter, um die Aufzeichnung auf diesem anderen Gerät zu aktivieren, wenn dieses verfügbar ist.

7. Aufzeichnungsgerät nach Anspruch 6, **dadurch gekennzeichnet, dass** es außerdem Mittel zur Verhandlung (22) enthält, die aktiviert werden, wenn für die Aufzeichnung des Programms kein Aufzeichnungsgerät verfügbar ist, und die Verhandlungsmittel Freigabeinformationen eines Aufzeichnungsgeräts empfangen und die Durchführung der Aufzeichnung der Sendung auf dem derart freigegebenen Gerät auslösen.

8. Aufzeichnungsgerät nach einem der Ansprüche 6 oder 7, **gekennzeichnet durch** Prüfmittel (12) für die erfolgte Aufzeichnung und ein Suchmittel (13, 14, 15) nach einer anderen Sendezeit des Programms zur Aufzeichnung eines neuen Programms, wenn die erste Aufzeichnung schlecht erfolgt ist.

9. Aufzeichnungsgerät nach einem der Ansprüche 6 bis 8, **dadurch gekennzeichnet, dass** das Aufzeichnungsgerät ein digitaler Videorecorder ist.

## Claims

1. Process for managing recordings within a communication network, the said communication network comprising at least one means for receiving audiovisual programs (STB) and service information broadcast by a broadcasting network; the process comprising
- a) a preliminary step of entering parameters for programming a recording of an audiovisual program at a specified moment and into a specified recording device,
- b) at the specified moment, testing whether the specified storage device is available (10);
- c) in the case of negative response to step a), searching for at least one other moment of broadcasting of the program (16, 17) in the broadcast service information;
- d) if the program is broadcast later, modification of the specified moment with a view to recording during a later broadcast (18)
**characterized in that** the network comprises a plurality of devices (VCR1, VCR2, DD) for recording the said audiovisual programs and **in that** the process furthermore comprises the step:
- e) if the program is not broadcast later, searching for another available recording device connected to the network and execution of the recording at the specified moment (21,21) in an available device.

2. Process for managing recording according to Claim 1; **characterized in that** it furthermore comprises the steps of:
- f) if no recording device is available, negotiating with the users or the applications using the missing devices so as to determine whether the latter can release the said missing devices (22,23);
- g) if the missing devices are obtained, instigating the recording on the device thus released (11).

3. Process for managing recording according to Claim 1 or 2, **characterized in that**, if at the moment of a re-broadcasting of the program, the specified device is not available, the process searches for another equivalent recording device (VCR1, VCR2, DD) for performing the recording.

4. Process for managing recording according to any one of the preceding claims; **characterized in that** following the recording of the program (11), it furthermore comprises the steps:
- h) of verifying the recording (12);
- i) if the recording ran badly, of a step of searching for at least one other moment of broadcasting of the said program and of a step of programming a new recording (13, 14, 15).

5. Process for managing recording according to any one of the preceding claims; **characterized in that** the audiovisual programs are of digital kind.

6. Device (VCR1, VCR2, DD) for recording audiovisual programs received through a broadcasting network comprising a means (K1) of entering parameters for programming a recording, the said parameters comprising at least a specified moment of recording corresponding to a broadcast, a memory (M1) for storing the said parameters, and a means (DEMUX) for receiving service information specifying the broadcasts on the broadcasting network of the said audiovisual programs, **characterized in that** it furthermore comprises a means (µP1, M1) for selecting another broadcast when the recording device is not available at the specified moment, and a means for modifying in the memory (M1) the moment of recording, so as to write the selected moment of broadcasting, of a means for searching for another recording device when the device is not available during the broadcasting of the program and if another broadcast is found, and a means for sending programming parameters so as to activate the recording on this other device if the latter is available.

7. Recording device according to Claim 6 **characterized in that** it furthermore comprises a negotiation means (22) activated when no recording device is available to record the program, the said negotiation means receiving a cue of release of a recording device and instigating the execution of the recording of the program on the device thus released.

8. Recording device according to any one of Claims 6 or 7 **characterized in that** it comprises a means (12) for verifying the recording performed and a means (13, 14, 15) for searching for another moment of broadcasting of the said program so as to record the program again, if the first recording ran badly.

9. Recording device according to any one of Claims 6 to 8, **characterized in that** the recording device is a digital video recorder.
